# EUROPEAN PATENT APPLICATION

(11) **EP 4 607 983 A1**
(43) Date of publication of application: **27.08.2025**
(21) Application number: 22962484.6
(22) Date of filing: 21.10.2022
(51) Int. Cl.: H04W 12/00

(54) **INFORMATION UPDATE METHOD AND APPARATUS, AND DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: ZHU, Hui, Dongguan, Guangdong 523860 (CN); LUO, Chaoming, Dongguan, Guangdong 523860 (CN); ZHANG, Xuan, Dongguan, Guangdong 523860 (CN); YANG, Huimin, Dongguan, Guangdong 523860 (CN)
(74) Representative: Novagraaf Technologies
(86) International application number: PCT/CN2022/126821
(87) International publication number: WO 2024/082302

(57) **Abstract**

An information update method and apparatus, and a device and a storage medium, which belong to the technical field of wireless local area networks. The method comprises: when an over-the-air (OTA) media access control (MAC) address of a station device changes, updating new first information of the station device according to first secret information, wherein the first information is information used when transmission is performed between the station device and an access point device, and the first secret information is information pre-determined by the station device and the access point device. The present solution can save on signaling resources.

## Description

### TECHNICAL FIELD

The present disclosure relates to the technical field of wireless local area networks (WLANs), and in particular, relates to a method and apparatus for updating information, and a device and a storage medium thereof.

### RELATED ART

In a WLAN, a station (STA) device is capable of changing its over-the-air (OTA) medium access control (MAC) address to avoid being tracked and to prevent privacy leakage.

In related arts, after the STA device changes its OTA MAC address, an access point (AP) device is capable of allocating information such as a new association ID (AID), a MAC frame sequence number (SN), and a MAC frame encryption/decryption packet number (PN) to the STA device over signaling, to prevent the STA device from being tracked.

However, in the above solution, the AP device needs to transmit signaling indicating the AID, the SN, the PN, or the like to the STA device each time the STA device changes its OTA MAC address, which occupies excessive signaling resources.

### SUMMARY

Embodiments of the present disclosure provide a method and apparatus for updating information, and a device and a storage medium thereof. The technical solutions are as follows.

In an aspect of the present disclosure, a method for updating information is provided. The method includes: updating new first information of the STA device based on first secret information along with a change in an OTA MAC address of the STA device; wherein the first information is information used during data transmission between the STA device and the AP device, and the first secret information is information predetermined by the STA device and the AP device.

In another aspect of the present disclosure, an apparatus for updating information is provided. The apparatus includes: an updating module, configured to update new first information of an STA device based on first secret information along with a change in an OTA MAC address of the STA device; wherein the first information is information used during data transmission between the STA device and an AP device, and the first secret information is information predetermined by the STA device and the AP device.

In another aspect of the present disclosure, a communication device is provided. The communication device includes: a processor, a memory and a transceiver; wherein the memory stores at least one computer program therein, and the processor, when running the at least one computer program, causes the communication device to perform the method for updating information as described above.

In another aspect of the present disclosure, a computer-readable storage medium is provided. The computer-readable storage medium stores at least one computer program therein, wherein the at least one computer program, when run by a processor, causes the processor to perform the method for updating information as described above.

In another aspect of the present disclosure, a chip is provided. The chip runs in a communication device to cause communication device to perform the method for updating information as described above.

In another aspect of the present disclosure, a computer program product is provided. The computer program product includes at least one computer instruction stored in a computer-readable storage medium; wherein a processor of a communication device, when reading and executing the at least one computer instruction from the computer-readable storage medium, causes the communication device to perform the method for updating information as described above.

In another aspect of the present disclosure, a computer program is provided. The computer program, when run by a processor of a communication device, causes the communication device to perform the method for updating information as described above.

According to the technical solutions provided in the embodiments of the present disclosure, along with the change in the OTA MAC address of the STA device, the STA device and the AP device are capable of determining the new first information used during data transmission between the STA device and the AP device based on the first secret information. Because the first secret information is predetermined between the STA device and the AP device, the STA device and the AP device do not need to interact more with each other during the process of determining the new first information by themselves, thereby saving the signaling resources.

### BRIEF DESCRIPTION OF DRAWINGS

For clearer descriptions of the technical solutions according to the embodiments of the present disclosure, the accompanying drawings required for describing the embodiments are briefly introduced hereinafter. Apparently, the accompanying drawings in the following description illustrate merely some embodiments of the present disclosure, and those of ordinary skill in the art may still derive other drawings from these accompanying drawings without creative efforts.
FIG. 1 is a schematic diagram of an architecture of a communication system according to some embodiments of the present disclosure;
FIG. 2 and FIG. 3 are schematic diagrams of MAC frame headers involved in the present disclosure;
FIG. 4 and FIG. 5 are diagrams of two formats of an SN in a Sequence Control field involved in the present disclosure;
FIG. 6 is a diagram of a format of a Counter mode with Cipher-block chaining Message authentication code Protocol (CCMP) header involved in the present disclosure;
FIG. 7 is a diagram of a format of a Galois Counter Mode Protocol (GCMP) header involved in the present disclosure;
FIG. 8 is a flowchart of a method for updating information according to some embodiments of the present disclosure;
FIG. 9 is a schematic diagram of updating information involved in the present disclosure;
FIG. 10 is a flowchart of a method for updating information according to some embodiments of the present disclosure;
FIG. 11 is a schematic diagram of a management frame involved in the embodiments illustrated in FIG. 10;
FIG. 12 is a schematic diagram of a management frame involved in the embodiments illustrated in FIG. 10;
FIG. 13 is a frame diagram of updating information according to some embodiments of the present disclosure;
FIG. 14 is a block diagram of an apparatus for updating information according to some embodiments of the present disclosure; and
FIG. 15 is a schematic structural diagram of a communication device according to some embodiments of the present disclosure.

### DETAILED DESCRIPTION

For clearer descriptions of the objectives, technical solutions, and advantages of the present disclosure, the embodiments of the present disclosure are further described in detail hereinafter with reference to the accompanying drawings.

The network architecture and services scenarios described in the embodiments of the present disclosure are provided for the purpose of illustrating the technical solutions of the embodiments of the present disclosure more clearly and do not constitute a limitation on the technical solutions provided by the embodiments of the present disclosure. Those of ordinary skill in the art may understand know that, with the evolution of the network architecture and the emergence of new services scenarios, the technical solutions provided by the embodiments of the present disclosure are also applicable to similar technical problems.

The technical solutions according to the embodiments of the present disclosure are applicable to various communication systems, such as a WLAN, a wireless fidelity (Wi-Fi) system, and other communication systems.

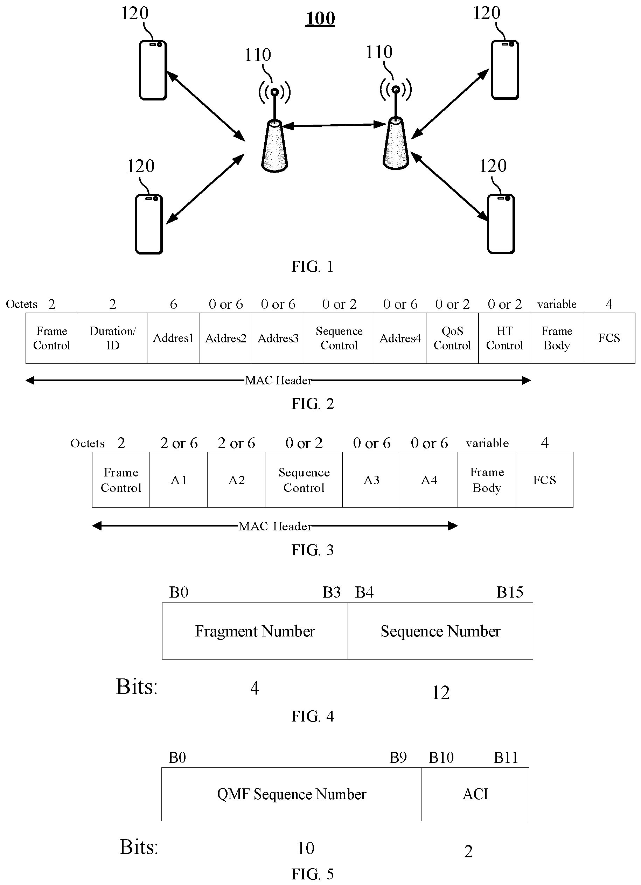

FIG. 1 is a schematic diagram of a network architecture of a communication system 100 according to some embodiments of the present disclosure. The communication system 100 may include an access point (AP) device 110 and station (STA) devices 120 connected to a network by the AP device 110.

In some scenarios, an AP is also referred to as an AP STA. That is, in a certain sense, the AP is also a type of STA.

In some scenarios, an STA is also referred to as a non-AP STA.

Communication within the communication system 100 may be communication between an AP and a non-AP STA, communication between non-AP STAs, or communication between an STA and a peer STA. The peer STA refers to a device that is in peer-to-peer communication with the STA. For example, the peer STA may be an AP or a non-AP STA.

The AP functions as a bridge connecting wired and wireless networks, primarily serving to connect various wireless network clients together and then access the wireless network to the Ethernet. An AP device may be a terminal device (e.g., mobile phone) equipped with a Wi-Fi chip or a network device (e.g., a wireless router, a wireless switch, or a wireless relay device).

It is understandable that an STA plays a variety of roles in the communication system. For example, in some scenarios, the mobile phone acts as a non-AP STA in a case where a mobile phone is connected to a router, and the mobile phone acts as an AP in a case where the mobile phone acts as a hotspot for another mobile phone.

Both the AP and the non-AP STA may be devices applicable to the Internet of vehicles, nodes and sensors in the Internet of things (IoT), smart cameras, smart remotes, smart water meters and electricity meters in smart homes, sensors in smart cities, or the like.

In some embodiments, the non-AP STA supports the 802.11be standard. The non-AP STA also supports various current and future WLAN standards of the 802.11 series, such as 802.11 ax, 802.11 ac, 802.11n, 802.11g, 802.11b, and 802.11a.

In some embodiments, the AP is a device that supports the 802.11 be standard. The AP may also a device that supports various current and future WLAN standards of the 802.11 series, such as the 802.11 ax, the 802.11ac, the 802.11n, the 802.11g, the 802.11b, and the 802.11a.

In the embodiments of the present disclosure, the STA may be a device that supports WLAN/Wi-Fi technology such as a mobile phone, a Pad, a computer, a virtual reality (VR) device, an augmented reality (AR) device, a wireless device in industrial control, a set-top box, a wireless device in self-driving, an in-vehicle communication device, a wireless device in remote medical application, a wireless device in smart grids, a wireless device in transportation safety, a wireless device in smart cities, a wireless device in smart homes, a wireless communication chip/application specific integrated circuit (ASIC)/system on chip (SOC)/, or the like.

Frequency bands supported by the WLAN technology include, but are not limited to, low-frequency bands (e.g., 2.4 GHz, 5 GHz, or 6 GHz) and high-frequency bands (e.g., 60 GHz).

FIG. 1 schematically illustrates one AP STA and two non-AP STAs. In some embodiments, the communication system 100 includes a plurality of AP STAs and a varying number of non-AP STAs, which is not limited in the embodiments of the present disclosure.

It is understandable that devices having communication functions in the network/system in embodiments of the present disclosure may be referred to as communication devices. Taking the communication system 100 illustrated in FIG. 1 as an example, the communication devices may include the AP 110 and the STAs 120 having communication functions, and the AP 110 and the STAs 120 may be the specific devices as described above, which are not repeated herein any further. The communication device may further include other devices in the communication system 100, such as a network controller, a gateway, and other network entities, which is not limited in the embodiments of the present disclosure.

It is understandable that terms "system" and "network" herein are interchangeably used in the present disclosure. The term "and/or" herein merely indicates an association relationship describing associated objects, that is, three types of relationships. For example, the phrase "A and/or B" indicates (A), (B), or (A and B). In addition, the character "/" generally indicates an "or" relationship between the associated objects.

It is understandable that the term "indicate" in the embodiments of the present disclosure means a direct indication, an indirect indication, or an associated relationship. For example, A indicating B, which mean that A indicates B directly, e.g., B is acquired by A; or that A indicates B indirectly, e.g., A indicates C, wherein B is acquired by C; or that an association relationship is present between A and B.

In the descriptions of the embodiments of the present disclosure, term "corresponding" may indicate a direct corresponding relationship or indirect corresponding relationship between two objects, or indicate an association relationship between two objects, or indicate relationships such as indicating and being indicated, configuring and being configured, or the like.

In the embodiments of the present disclosure, "predefined" is implemented by pre-storing a corresponding code, a table, or another manner that may indicate related information in the device (for example, the terminal device or the network device), and the specific implementations are not limited in the present disclosure. For example, the term "predefined" refers to "defined in protocols."

In the embodiments of the present disclosure, the term "protocols" may be standard protocols in the field of communication. For example, the protocols include a Wi-Fi protocol and a related protocol applicable to a future Wi-Fi communication system, which is not limited in the present disclosure.

In the WLAN, an attacker is capable of identifying an STA based on element fingerprints and behavior fingerprints to track users corresponding to the STA, so it is necessary to change or obfuscate the relevant elements to prevent the attacker from identifying and tracking the users based on these elements. The above element fingerprints and behavior fingerprints may include a MAC frame SN, a MAC frame encryption/decryption PN, a physical layer protocol data unit (PPDU) scrambler seed, an AID, a traffic identifier (TID), or the like.

### 1) SN

The SN is present in the Sequence Control field of the MAC frame header illustrated in FIG. 2 and FIG. 3. In a case where a frame is a Protocol Version 0 (PV0) frame, the Sequence Control field is not present in the PV0 Control frame, and the Sequence Control field is present in all other PV0 frames. In a case where a frame is a Protocol Version 1 (PV1) frame, the Sequence Control field is not present in the PV1 Control frame and the PV1 Probe Response frame, and the Sequence Control field is present in all other PV1 frames.

In a case where the Sequence Control field is present in a frame and the frame is a Non-Quality-of-Service Management frame (QMF), the format of the SN in the Sequence Control field is as illustrated in FIG. 4, with a length of 12 bits. In a case where the Sequence Control field is present in a frame and the frame is a QMF, the format of the SN in the Sequence Control field is as illustrated in FIG. 5, with a length of 10 bits.

The STA maintains one or more SN spaces to determine the SN of a frame during transmission of the frame. In a case where a plurality of SN spaces are supported, an appropriate SN space is determined based on information from the MAC Control field of the frame to be transmitted. For each non-QMF MAC service data unit (MSDU) or MAC management protocol data unit (MMPDU) transmitted using the SN space, each SN space is represented by a modulo 4096 counter, starting from 0 and incrementing by 1. For each QMF transmitted using the SN space, each SN space is represented by a modulo 1024 counter, starting from 0 and incrementing by 1.

The STA maintains one or more duplicate detection caches. Upon receipt of a data frame, a management frame, or an extended frame, a record of the frame is inserted into an appropriate cache. The record is marked with the SN in the MAC Control field of the frame and other possible information. Upon receipt of a data frame, a management frame, or an extended frame for which the Retry subfield of the Frame Control field is equal to 1, an appropriate cache, if any, is searched to look for a matching frame. In the DMG, upon receipt of a group addressed frame, an appropriate cache is searched to look for a matching frame. In response to receiving a PV1 data frame or a PV1 management frame, an appropriate cache is searched to look for a matching frame no matter whether the Retry subfield of the Frame Control field is present. In a case where the search is successful, the frame is considered a duplicate and the duplicate frame is discarded.

### 2) PN

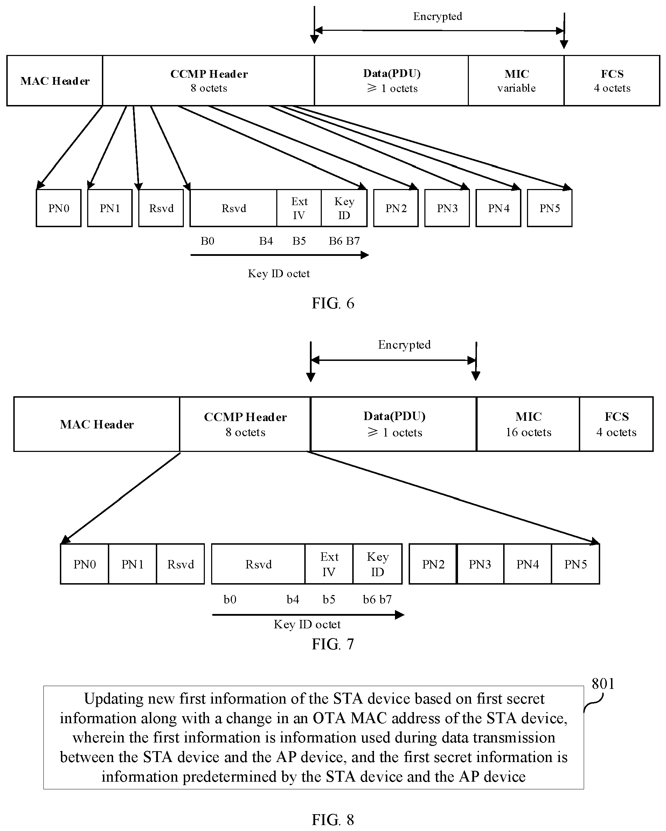

The PN is present in the Counter Mode with Cipher-block Chaining Message Authentication Code Protocol (CCMP) header illustrated in FIG. 6 and the Galois Counter Mode Protocol (GCMP) header illustrated in FIG. 7, with a length of 48 bits. The CCMP header and the GCMP header are only present in data frames and individually addressed robust management frames.

During CCMP and GCMP encapsulation, the PN is used to construct a nonce, and for each MAC protocol data unit (MPDU), the PN is incremented by a positive number. For MPDUs consisting of fragmented MSDUs and MMPDUs, the PN shall be incremented by 1. For PV0 MPDUs, the PN shall not be repeated for a series of encrypted MPDUs using the same ephemeral key. For PV1 MPDUs, the PN shall not be repeated for a series of encrypted MPDUs using the same ephemeral key and TID/access category index (ACI). Actually, the PN numbers the MPDUs sequentially. Each transmission equipment maintains a separate PN for each pairwise transient key security association (PTKSA) and each group temporal key security association (GTKSA). For example, the AP maintains one PN for all individually addressed frames using the same PTKSA that are transmitted to station 1, and maintains one PN for all multicast frames using the same GTKSA that are transmitted to station 1, and station 1 maintains one PN for all individually addressed frames using the same PTKSA that are transmitted to the AP.

The PN is also used for implementing replay detection with the following processing rules.
(1) A receiver maintains a separate set of replay counters for any PTKSA, GTKSA, and protocol version value. The receiver initializes the replay counters to 0 when the receiver resets the pairwise transient key. The replay counters are set to the PN value of the CCMP or of the GCMP MPDU of the transmitter.
(2) For any PTKSA, GTKSA, and protocol version value, the receiver should maintain a separate replay counter for any TID, subject to the limitation of the number of supported replay counters indicated in the RSN Capabilities field, and should use the PN from a received frame to detect replayed frames. A replayed frame occurs in a case where the PN from a received frame is less than or equal to a value of the replay counter that corresponds to the priority and frame type of the MSDU or aggregate MAC service data unit (A-MSDU).
(3) In a case where dot11RSNAProtectedManagementFramesActivated is true, the receiver should maintain a single replay counter for received individually addressed robust management frames that are received with the To DS subfield equal to 0, and a single replay counter for received individually addressed robust PV1 management frames and should use the PN to detect replays from the received frame. in a case where dot11QMFActivated is also true, the receiver should maintain an additional replay counter for each ACI for received individually addressed robust management frames and robust PV1 management frames that are received with the To DS subfield equal to 1. The QMF receiver should use the ACI encoded in the Sequence Number field of the received frame to select the replay counter to use for the received frame, and should use the PN from the received frame to detect replays. A replayed frame occurs in a case where the PN from the frame is less than or equal to the current value of the management frame replay counter that corresponds to the ACI of the frame.
(4) The receiver should discard any data frame that is received with its PN less than or equal to the value of the replay counter that is associated with the TA and priority value of the received MPDU. The receiver should discard MSDUs and MMPDUs whose constituent MPDU PN values are not incrementing by 1. In a case where dot11RSNAProtectedManagementFramesActivated is true, the receiver should discard any individually addressed robust management frame that is received with its PN less than or equal to the value of the replay counter associated with the TA of the individually addressed management frame.
(5) In response to discarding a frame, the receiver should increment by one dot11RSNAStatsCCMPReplays for data frames, or the receiver should increment by one dot11RSNAStatsRobustMgmtCCMP Replays for robust management frames.
(6) For MSDUs or A-MSDUs transmitted using the block acknowledgement feature, reordering of received MSDUs or A-MSDUs based on the block acknowledgement receiver operation is performed prior to replay detection.

### 3) Scrambler seed

A Data field of the physical (PHY) layer consists of four parts: SERVICE, PHY service data unit (PSDU), tail, and pad parts. The value of bits B0-B6 of the SERVICE field is the initial value of the scrambler seed, wherein the initial value of the scrambler seed varies based on the conditions of TXVECTORSTA and RXVECTOR, and the value of the scrambler seed is increased by 1 each time a frame is transmitted.

### 4) AID

The AID is present in the frame body of a (re)association request frame, occupying two octets, and the (re)association request frame is transmitted only by the AP. In a case where an association request transmitted by the STA to the AP is approved, the AP responds by transmitting a status code 0 representing success and the AID to the STA. The AID has a value within a range of 1 to 2007, and the AID value allocated to the STA is unique in the BSS.

The AID is present in the Duration/ID field of a Power Save-Poll (PS-Poll) frame, which is transmitted only by the STA. The STA acquires from the AP the frames temporarily stored by the AP for the STA by transmitting the PS-Poll frame to the AP, and in a case where the AP receives the PS-Poll frame from the STA, the AP determines whether a frame has been temporarily stored based on the AID value in the frame.

The AID is present in the AID12 field (in the case of a non-S1G STA) or the AID13 field (in the case of an S1G STA) in the STA Info List field of the VHT NDP Announcement frame, which is transmitted only by the AP.

The AID is present in a trigger frame transmitted by the AP, occupying two bytes.

### 5) TID

When a frame is a PV0 frame, in a case where the value of Type in the Frame Control field is equal to 1 and the value of the most significant bit of Subtype is 1, the frame header contains a QoS Control field, and the TID is present in bits B0-B3 of the QoS Control field, with a value within a range of 0 to 15.

When a frame is a PV1 frame, in a case where the value of Type in the Frame Control field is equal to 0 or 3, the TID is present in bits B5-B7 of the Frame Control field.

In a case where the transmitter transmits a data frame containing a TID field, the value of the TID field is assigned based on the data type according to protocols.

In a case where the receiver receives a data frame containing the TID field, the data frame is put into different priority queues based on the TID value to provide better quality of service.

With respect to the risk of privacy leakage of the SN, the PN, the scrambler seed, the AID, and the TID, the 802.11 bi Working Group is discussing to define a mechanism for STAs and APs to change the SNs and scrambler seeds transmitted on the downlink and uplink to irrelevant new values in association STA state 4 without losing any connection when the OTA MAC address of a client privacy enhanced (CPE) client is changed, define a mechanism for STAs and APs to change the PNs transmitted on the downlink and uplink to irrelevant new values in the association STA state 4 without losing any connection when the OTA MAC address of the CPE client is changed, define a mechanism for STAs and APs to change the AIDs of the CPE client to irrelevant new values in the association STA state 4 without losing any connection when the OTA MAC address of the CPE client is changed, and define a mechanism for STAs and APs to obfuscate the transmitted TID to an irrelevant new value on the downlink and a new value in the association STA state 4 on the uplink without losing any connection.

In a possible solution, with respect to the risk of privacy leakage of the SN, the PN, the scrambler seed, and the AID, the STA may reset the SN, the PN, and the scrambler seed and change the AID in a case where the STA changes its OTA MAC. Exemplary, the STA indicates random offsets of its SN and PN to the AP by transmitting a request frame to the AP, and in a case where the AP receives the request frame from the STA, the AP allocates a new AID to the STA in the response frame if the AP receives the request from the STA. Alternatively, the STA may change the MAC address and parameters based on a pre-agreed or predetermined mode at each pre-agreed scheduled period, the AP and each STA agree on the seeds of each random number (e.g., MAC address, SN offset, and PN offset) to be generated, and the AP and the STA agree on changes of the AID within a specific range. The AP does not allocate AIDs within the range to other STAs that do not want to change the MAC addresses, the AP indicates the range of AIDs to the STA over protected management frames, and then the AP indicates one seed for each STA to generate a permutation sequence of AIDs within a specific range. When the STA changes its MAC address based on the seed for changing the MAC address as agreed with the AP, the STA changes its SN and PN based on the seeds for changing the SN and PN offsets as agreed with the AP, and changes its AID value based on the permutation sequence of AIDs within the specific range as specified by the AP. However, in the above method, the TID is not protected, and the seeds used for processing the SN, the PN and the AID are independent of each other, which requires more resources.

Accordingly, the present disclosure provides a solution that reduces signaling interactions between the AP and the STA while obfuscating the fingerprint elements and behavior elements.

Referring to FIG. 8, FIG. 8 is a flowchart of a method for updating information according to some embodiments of the present disclosure. The method is applicable to a communication device, wherein the communication device is one of a STA device or an AP device in a WLAN. The AP device may be the AP device 110 in the network architecture illustrated in FIG. 1, and the STA device may be the STA device 120 in the network architecture illustrated in FIG. 1. The method includes the following process.

In S801, new first information of the STA device is updated based on first secret information along with a change in an OTA MAC address of the STA device. The first information is information used during data transmission between the STA device and the AP device, and the first secret information is information predetermined by the STA device and the AP device.

In some embodiments, along with the change in the OTA MAC address of the STA device, the STA device and the AP device generate the new first information using the same first secret information and the same generating algorithm, thereby ensuring the new first information generated by the STA device and the AP device themselves is consistent.

In some embodiments, the first secret information is information determined by the STA device through negotiation with the AP device during the process of associating to the AP device.

Alternatively, the first secret information is information allocated by the AP device to the STA device during the process that the STA device is associated to the AP device.

In some embodiments, the first secret information is information that uniquely corresponds to the STA device in the WLAN.

In summary, according to the technical solution according to the embodiments of the present disclosure, along with a change in the OTA MAC address of the STA device, the STA device and the AP device are capable of determining the new first information used during data transmission between the STA device and the AP device based on the first secret information. Because the first secret information is predetermined between the STA device and the AP device, the STA device and the AP device do not need to interact more with each other during the process of determining the new first information by themselves, thereby saving the signaling resources.

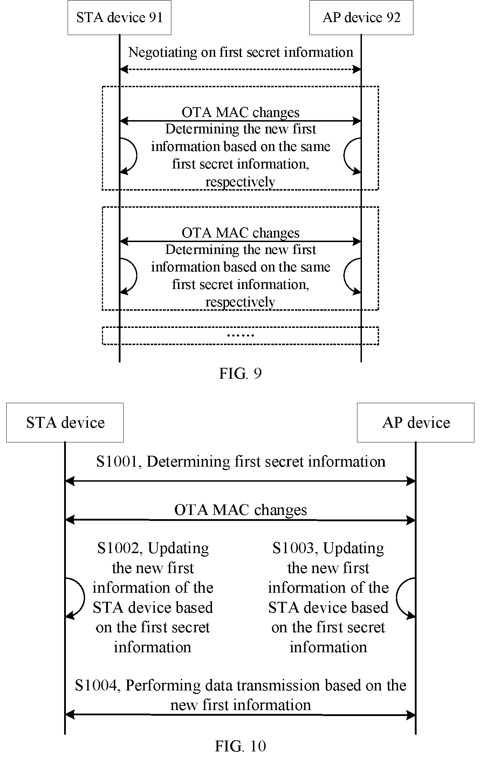

Based on the embodiments illustrated in FIG. 8, FIG. 9 illustrates a schematic diagram of updating information involved in the present disclosure. As illustrated in FIG. 9, the STA device 91 and the AP device 92 predetermine the first secret information. Then, each time the STA device 91 updates the OTA MAC address, the STA device 91 and the AP device 92 respectively determine the new first information corresponding to the STA device 91 based on the same first secret information. Because the STA device 91 and the AP device 92 respectively determine the new first information based on the same first secret information, the STA device 91 and the AP device 92 are capable of determining the same first information, and signaling interactions between the STA device 91 and the AP device 92 in determining the first information can be reduced.

Based on the embodiments illustrated in FIG. 8 and FIG. 9, FIG. 10 illustrates a flowchart of a method for updating information according to some embodiments of the present disclosure. The method is performed by the STA device and the AP device in interaction. The STA device and the AP device may be the STA device 120 and the AP device 110 in the network architecture illustrated in FIG. 1. The method includes the following processes.

In S1001, the STA device and the AP device determine the first secret information.

In some embodiments, the STA device determines, through negotiation with the AP device, the first secret information that uniquely corresponds to the STA device in the WLAN during the process of associating to the AP device, or the AP device allocates the first secret information to the STA device.

In some embodiments, the first secret information is dedicated to generating the new first information.

In some other embodiments, the first secret information reuses other existing information that uniquely corresponds to the STA device and commonly known by the STA device and the AP device, for example, a temporal key (TK) in the pairwise transient key security association (PTKSA).

In S1002, along with a change in an OTA MAC address of the STA device, the STA device updates the new first information of the STA device based on the first secret information. The first information is information used during data transmission between the STA device and the AP device.

In S1003, along with the change in the OTA MAC address of the STA device, the AP device updates the new first information of the STA device based on the first secret information. The first information is information used during data transmission between the STA device and the AP device.

In some embodiments, the first information includes at least one of: an OTA-TID, a MAC frame SN, a MAC frame encryption/decryption PN, a physical layer protocol data unit (PPDU) scrambler seed, or an AID.

The OTA-TID is used for obfuscating an actual TID during data transmission.

As for the privacy leakage of the SN, the PN, the scrambler seed, the AID, and the TID in the WLAN, even if the STA changes the MAC address within associated state, in a case where the SN, the PN, and the scrambler seed are never reset, the SN, the PN, and the scrambler seed can be used for tracking a device (the SN, the PN, and the scrambler seed can be used for tracking the STA because the SN, the PN, and the scrambler seed change according to certain rules); in a case where the AID has never been changed, the AID can be used for tracking the device (because the AID is unique in the WLAN, i.e., the AID values of the STAs in the WLAN are different from each other, in a case where the STA transmits a frame containing the AID, the value can be used to identify the STA); and in a case where the TIDs are not obfuscated before being transmitted, the behavior fingerprints formed of the TIDs can be used for tracking the device (because the numbers of different types of data packets transmitted from or received by different STAs are different, i.e., the set formed of the TIDs in the data packets may be used to identify the STA).

In this regard, according to the embodiments of the present disclosure, at least one of the OTA-TID, the MAC frame SN, the MAC frame PN, the PPDU scrambler seed, or the AID (i.e., the above first information) is changed along with the change in the OTA MAC of the STA device.

In the embodiments of the present disclosure, different types of information in the first information are processed based on different solutions.

### 1. Solution for updating the OTA-TID, the MAC frame SN, the MAC frame PN, and the PPDU scrambler seed.

In some embodiments, calculating the new first information of the STA device based on the first secret information along with the change in the OTA MAC address of the STA device includes: in a case where the first information includes at least one of the OTA-TID, the SN, the PN, or the scrambler seed, generating a random number of the STA device based on the first secret information and a changed first OTA MAC address of the STA device along with the change in the OTA MAC address of the STA device; and generating the new first information of the STA device based on the random number of the STA device.

In some embodiments, for the OTA-TID, the MAC frame SN, the MAC frame PN, and the PPDU scrambler seed, in a case where the STA change its OTA MAC address within associated state, the STA device and the AP device reset the SN, the PN and the scrambler seed and change the OTA transmission TID value (i.e., OAT TID) using the same algorithm and the same first secret information, for example, using the same random number and algorithm. The random number is acquired based on the first secret information and the changed first OTA MAC address of the STA device.

In some embodiments, generating the random number of the STA device based on the first secret information and the changed first OTA MAC address of the STA device along with the change in the OTA MAC address of the STA device includes: acquiring the random number of the STA device by performing a Hash calculation on a concatenated string of the first OTA MAC address and the first secret information.

In some embodiments, generating the new first information of the STA device based on the random number of the STA device includes: generating a new OTA-TID of the STA device based on a first portion of bits in the random number of the STA device and actual TIDs in a case where the first information includes the OTA-TID, wherein the first portion of bits is a set of bits within a first bit position range of the random number of the STA device.

In some embodiments, when the new OTA-TID of the STA device is determined, the STA device or the AP device determines the first portion of bits from the random number, and calculates the OTA-TIDs respectively corresponding to the actual TID values based on the first portion of bits and the actual TID values (generally, 0 to 15) using the same OTA-TID calculation method.

The bit positions of the first portion of bits in the random number of the STA device (i.e., the first bit position range) may be stipulated by protocols. Alternatively, the first bit position range may be predefined through negotiation by the STA device and the AP device, for example, the STA device, when associating to the AP device, may agree upon the first bit position range through negotiation with the AP device.

In some embodiments, generating the new OTA-TID of the STA device based on the first portion of bits in the random number of the STA device and the actual TIDs includes: acquiring new OTA-TIDs of the STA device by performing an XOR operation on the first portion of bits and each of the actual TIDs, wherein the new OTA-TIDs of the STA device are in one-to-one correspondence with the actual TIDs.

For example, the number of bits of the first portion of bits is equal to the number of bits of the TID, and the STA device and the AP device acquire the OTA-TIDs in one-to-one correspondence with the actual TIDs by performing an XOR operation on each of the TIDs and the first portion of bits.

In some embodiments, generating the new first information of the STA device based on the random number of the STA device includes: generating a new SN of the STA device based on a second portion of bits in the random number of the STA device and an old SN of the STA device in a case where the first information includes the SN, wherein the second portion of bits is a set of bits within a second bit position range of the random number of the STA device.

In some embodiments, when the new SN of the STA device is determined, the STA device or the AP device determines the second portion of bits from the random number, and calculates the new SN based on the second portion of bits and the old SN corresponding to the STA device using the same SN calculation method.

The bit position of the second portion of bits in the random number of the STA device (i.e., the second bit position range) may be stipulated by a protocol. Alternatively, the second bit position range may be predefined through negotiation by the STA device and the AP device.

In some embodiments, generating the new SN of the STA device based on first portion of bits in the random number of the STA device and the old SN of the STA device includes: acquiring the new SN of the STA device by performing an XOR operation on the second portion of bits and the old SN of the STA device.

The old SN of the STA device may be a SN used in the previous transmission of data to a peer or a SN used in the previous transmission of data to the peer increased by 1 before the new SN is acquired.

For example, the number of bits of the second portion of bits is equal to the number of bits of the SN, and the STA device and the AP device acquire the new SN of the STA device by performing an XOR operation on the old SN of a terminal device and the second portion of bits, respectively.

In some embodiments, in a case where the communication device is the STA device, the old SN of the STA device includes an old uplink SN of the STA device, and the new SN of the STA device includes a new uplink SN of the STA device; or in a case where the communication device is the AP device, the old SN of the STA device includes an old downlink SN of the STA device, and the new SN of the STA device includes a new downlink SN of the STA device.

In the embodiments of the present disclosure, when updating the SN of the STA device, the STA device acquires a new uplink SN based on the uplink SN used in the previous transmission of data to the AP device or based on the uplink SN used in the previous transmission of data to the AP device increased by 1; and when updating the SN of the STA device, the AP device acquires a new downlink SN based on the downlink SN used in the previous transmission of data to the STA device or based on the downlink SN used in the previous transmission of data to the STA device increased by 1.

In some embodiments, generating the new first information of the STA device based on the random number of the STA device includes: generating a new PN of the STA device based on a third portion of bits in the random number of the STA device and an old PN of the STA device in a case where the first information includes the PN, wherein the third portion of bits is a set of bits within a third bit position range of the random number of the STA device.

In some embodiments, when the new PN of the STA device is determined, the STA device or the AP device determines the third portion of bits from the random number, and calculates the new PN based on the third portion of bits and the old PN corresponding to the STA device using the same PN calculation method.

The bit positions of the third portion of bits in the random number of the STA device (i.e., the third bit position range) may be stipulated by protocols. Alternatively, the third bit position range may be predefined through negotiation by the STA device and the AP device.

In some embodiments, generating the new PN of the STA device based on the third portion of bits in the random number of the STA device and the old PN of the STA device includes: acquiring the new PN of the STA device by performing an XOR operation on the third portion of bits and the old PN of the STA device.

The old PN of the STA device may be a PN used in the previous transmission of data to a peer or a PN used in the previous transmission of data to the peer increased by 1 before the new PN is acquired.

For example, the number of bits of the third portion of bits is equal to the number of bits of the PN, and the STA device and the AP device acquire the new PN of the STA device by performing an XOR operation on the old PN of the terminal device and the third portion of bits.

In some embodiments, in a case where the communication device is the STA device, the old PN of the STA device includes an old uplink PN of the STA device, and the new PN of the STA device includes a new uplink PN of the STA device; or in a case where the communication device is the AP device, the old PN of the STA device includes an old downlink PN of the STA device, and the new PN of the STA device includes a new downlink PN of the STA device.

In the embodiments of the present disclosure, when updating the PN of the STA device, the STA device acquires a new uplink PN based on the uplink PN used in the previous transmission of data to the AP device or based on the uplink PN used in the previous transmission of data to the AP device increased by 1; and when updating the PN of the STA device, the AP device acquires a new downlink PN based on the downlink PN used in the previous transmission of data to the STA device or based on the downlink PN used in the previous transmission of data to the STA device increased by 1.

In some embodiments, generating the new first information of the STA device based on the random number of the STA device includes: generating a new scrambler seed of the STA device based on a fourth portion of bits in the random number of the STA device and an old scrambler seed of the STA device in a case where the first information includes the scrambler seed, wherein the fourth portion of bits is a set of bits within a fourth bit position range of the random number of the STA device.

In some embodiments, when the new scrambler seed of the STA device is determined, the STA device or the AP device determines the fourth portion of bits from the random number, and calculates the new scrambler seed based on the fourth portion of bits and the old scrambler seed corresponding to the STA device using the same scrambler seed calculation method.

The bit position of the fourth portion of bits in the random number of the STA device (i.e., the fourth bit position range) may be stipulated by a protocol. Alternatively, the fourth bit position range may be predefined through negotiation by the STA device and the AP device.

In some embodiments, generating the new scrambler seed of the STA device based on the fourth portion of bits in the random number of the STA device and the old scrambler seed of the STA device includes: acquiring the new scrambler seed of the STA device by performing an XOR operation on the fourth portion of bits and the old scrambler seed of the STA device.

The old scrambler seed of the STA device may be a scrambler seed in the previous transmission of data to a peer or a scrambler seed used in the previous transmission of data to the peer increased by 1 before the new scrambler seed is acquired.

For example, the number of bits of the fourth portion of bits is equal to the number of bits of the scrambler seed, and the STA device and the AP device acquire the new scrambler seed of the STA device by performing an XOR operation on the old scrambler seed of the terminal device and the fourth portion of bits.

In some embodiments, in a case where the communication device is the STA device, the old scrambler seed of the STA device includes an old uplink scrambler seed of the STA device, and the new scrambler seed of the STA device includes a new uplink scrambler seed of the STA device; or in a case where the communication device is the AP device, the old scrambler seed of the STA device includes an old downlink scrambler seed of the STA device, and the new scrambler seed of the STA device includes a new downlink scrambler seed of the STA device.

In the embodiments of the present disclosure, when updating the scrambler seed of the STA device, the STA device acquires a new uplink scrambler seed based on the uplink scrambler seed used in the previous transmission of data to the AP device or based on the uplink scrambler seed used in the previous transmission of data to the AP device increased by 1; and when updating the scrambler seed of the STA device, the AP device acquires a new downlink scrambler seed based on the downlink scrambler seed used in the previous transmission of data to the STA device or based on the downlink scrambler seed used in the previous transmission of data to the STA device increased by 1.

In some embodiments, the parameters and algorithms used for processing the PN, the SN, the scrambler seed, and the TID are as follows.

### 1) STA end

In this solution, the algorithms used by the STA for calculating the used random number (RN), the OTA-TID value corresponding to the actual TID value, the RN corresponding to the uplink SN, the RN corresponding to the uplink PN, and the scrambler seed corresponding to the uplink scrambler seed are as follows:

RN=HSAH(MAC_{STA}∥IV). The parameter MAC_{STA} is the OTA MAC value currently used by the STA, the parameter IV is a secret value (i.e., the above first secret information) between the AP and the STA, the calculation result RN is a random number to be stored by the STA, ∥ represents string concatenation, the function HASH(X) represents a Hash operation on the parameter X, and the algorithm may be SHA2, SHA3 or the like.

OTA-TID=TID ⊕ RN₄. The parameter TID is an actual TID value of a frame transmitted by the STA, and the calculation result OTA-TID is an OTA-TID value of the frame transmitted by the STA. ⊕ represents an XOR operation (the same below).

SN'=SN⊕RN₁₂. The parameter SN is the value of the uplink sequence number corresponding to an OTA MAC previously used by the STA when the STA updates the OTA MAC, and the calculation result SN' is the value of the uplink sequence number corresponding to the OTA MAC currently used by the STA.

PN'=PN⊕RN₄₈. The parameter PN is the value of the uplink packet number corresponding to an OTA MAC previously used by the STA when the STA updates the OTA MAC, and the calculation result PN' is the value of the uplink packet number corresponding to the OTA MAC currently used by the STA.

Scrambler seed'=scrambler seed⊕RN₇. The parameter scrambler seed is the value of the uplink scrambler seed corresponding to an OTA MAC previously used by the STA when the STA updates the OTA MAC, and the calculation result scrambler seed' is the value of the uplink scrambler seed corresponding to the OTA MAC currently used by the STA.

The parameter RNx represents that X bits are intercepted from the RN, for example, X bits may be intercepted backward from the 0^{th} bit, or X bits may be intercepted forward from the last bit. For example, in the above algorithms, RN₄ is acquired by intercepting 4 bits backward from the 0^{th} bit of the RN, RN₁₂ is acquired by intercepting 12 bits backward from the 4^{th} bit of the RN, RN₄₈ is acquired by intercepting 48 bits backward from the 16^{th} bit of the RN, and RN₇ is acquired by intercepting 7 bits backward from the 64^{th} bit of the RN.

### 2) AP end

In this solution, the algorithms used by the AP for calculating the RN corresponding to an associated STA, the OTA-TID value corresponding to the actual TID value of a frame transmitted to the STA, the RN corresponding to the downlink SN of the STA, the RN corresponding to the downlink PN of the STA, and the scrambler seed corresponding to the downlink scrambler seed of the STA are as follows:

RN=HSAH(MAC_{STA}∥IV). The parameter MAC_{STA} is the OTA MAC value currently used by the STA, the parameter IV is a secret value between the STA and the AP, the calculation result RN is a random number corresponding to the STA that is stored by the AP, and ∥ and the function HASH(X) have the same meanings as described above.

OTA-TID=TID ⊕ RN₄. The parameter TID is an actual TID value of the frame transmitted by the AP to the STA, and the calculation result OTA-TID is an OTA-TID value of the frame transmitted by the AP to the STA.

SN'=SN⊕RN₁₂. The parameter SN is the value of the downlink sequence number corresponding to a previous OTA MAC of the STA that is maintained by the AP when the STA updates the OTA MAC, and the calculation result SN' is the value of the downlink sequence number corresponding to the OTA MAC currently used by the STA that is maintained by the AP.

PN'=PN⊕RN₄₈. The parameter PN is the value of the downlink packet number corresponding to a previous OTA MAC of the STA that is maintained by the AP when the STA updates the OTA MAC, and the calculation result PN' is the value of the downlink packet number corresponding to the OTA MAC currently used by the STA that is maintained by the AP.

Scrambler seed'=scrambler seed⊕RN₇. The parameter scrambler seed is the value of the downlink scrambler seed corresponding to a previous OTA MAC of the STA that is maintained by the AP when the STA updates the OTA MAC, and the calculation result scrambler seed' is the value of the downlink scrambler seed corresponding to the OTA MAC currently used by the STA that is maintained by the AP.

The parameter RNₓ has the same meaning as described above.

In this solution, when the STA changes its OTA MAC address, the STA first calculates a random number based on the secret value between the STA and the AP and the OTA MAC address currently used, resets the SN, the PN, and the scrambler seed using the random number and the same algorithm, and calculates the OTA transmission value corresponding to the stored TID value (0 to 15) using the random number and the same algorithm. In this solution, the same random number and the same algorithm are used to process the SN, the PN, the scrambler seed, and the TID.

In this solution, when the STA changes its OTA MAC address, assuming that the OTA MAC address of the STA is updated from MACᵢ to MACᵢ₊₁, then the STA generates the initial values of the uplink SN, the uplink PN, and the uplink scrambler seed corresponding to MACᵢ₊₁ using the same random number and the same algorithm. The values of the downlink SN, the downlink PN, and the downlink scrambler seed corresponding to MACᵢ₊₁ of the STA are values of the SN, the PN, and the scrambler seed containing in the frames transmitted by the AP to the MACᵢ₊₁. After the STA changes its OTA MAC address, in addition to maintaining the new uplink and downlink SN, PN, and scrambler seed values above, the STA and the AP also need to maintain the uplink and downlink SN, PN, and scrambler seed values when the OTA MAC address of the STA is MACᵢ within a predefined duration or within a duration predefined at the time of association. When the STA processes a frame whose transmitter address is MACᵢ₊₁, the STA processes the frame based on the uplink and downlink SN, PN, and scrambler seed values corresponding to MACᵢ. When the AP processes a frame whose transmitter address is MACᵢ, the AP processes the frame based on the uplink and downlink SN, PN, and scrambler seed values corresponding to MACᵢ.

### 2. Solution for updating the AID.

First approach: the AID is allocated by the AP.

In some embodiments, calculating the new first information of the STA device based on the first secret information along with the change in the OTA MAC address of the STA device includes: in a case where the first information includes the AID and the communication device is the AP device, allocating a new AID to the STA device along with the change in the OTA MAC address of the STA device; and transmitting the new AID of the STA device to the STA device.

In some embodiments, calculating the new first information of the STA device based on the first secret information along with the change in the OTA MAC address of the STA device includes: in a case where the first information includes the AID and the communication device is the STA device, receiving a new AID allocated by the AP device to the STA device along with the change in the OTA MAC address of the STA device.

In some embodiments, along with the change in the OTA MAC address of the STA device, the AP device directly allocates a new AID to the STA device and transmits the new AID to the STA device.In some embodiments, the new AID of the STA device is encrypted by the AP device using the first secret information and transmitted to the STA device over an action frame.

In some embodiments, a Category field of the action frame includes a first indicator bit, wherein a bit value of the first indicator bit indicates whether the encrypted new AID is contained at a specified bit position of the action frame.

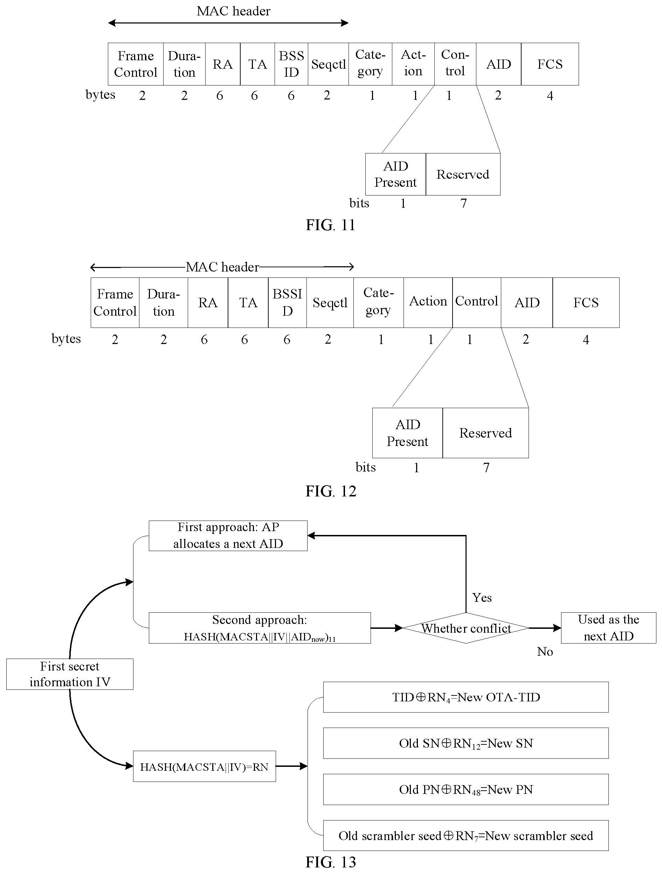

In a case where the above first approach is adopted (that is, the AP allocates a new AID to the STA device each time the STA device changes its OTA MAC address), when the STA updates its OTA MAC address from MACᵢ to MACᵢ₊₁, in a case where the AP, upon receiving, for the first time, a frame whose transmitter address being MACᵢ₊₁ from the STA, selects one AID from AIDs that have not been allocates, and encrypts the AID with the secret information IV (consistent with secret information for processing the PN, the SN, the scrambler seed, and TID) shared with the STA and puts the encrypted AID into a management frame for transmission to the STA, the format of the management frame may be as illustrated in FIG. 11. Upon receiving the management frame, the STA decrypts the management frame using the secret information IV shared with the AP to acquire the new AID.

As illustrated in the schematic diagram of the management frame in FIG. 11, an action frame is transmitted. Because the values "30-125" of the Category field of the action frame are reserved, an arbitrary value is selected (e.g., "32") for indication in this solution. The AID Present bit is set to "1", indicating that an AID field is present later, otherwise indicating an AID field is not present subsequently. In a case where the STA receives the frame, the STA needs to decrypt the ciphertext in the AID field of the management frame using the secret information IV shared with the AP to acquire the new AID.

Second approach: AIDs used at the next time of updating are generated respectively according to the same algorithm, and an AID is allocated by the AP in a case where the AID conflicts with the AIDs of other STA devices.

In some embodiments, calculating the new first information of the STA device based on the first secret information along with the change in the OTA MAC address of the STA device includes: in a case where the first information includes the AID, generating the new AID of the STA device based on the first secret information, the changed first OTA MAC address of the STA device, and the AID currently used by the STA device, wherein the new AID of the STA device is used after a next update of the OTA MAC address by the STA device.

In some embodiments, it is detected whether the new AID of the STA device conflicts with new AIDs of other stations and the AID currently used in a case where the communication device is the AP device, wherein the other stations are stations other than the STA device in stations associated by the AP device; a first AID is allocated to the STA device in a case where the new AID of the STA device conflicts with the new AIDs of other stations and the AID currently used; the new AID of the STA device is updated using the first AID; and the first AID is transmitted to the STA device.

In some embodiments, the first AID transmitted by the AP device is received and the new AID of the STA device is updated using the first AID in a case where the communication device is the STA device; wherein the first AID is an AID allocated to the STA device by the AP device in a case where the AP device detects that the new AID of the STA device conflicts with new AIDs of other stations and the AID currently used, wherein the other stations are stations other than the STA device in stations associated by the AP device.

In some embodiments, the first AID is encrypted by the AP device using the first secret information and transmitted to the STA device over an action frame.

In some embodiments, a Category field of the action frame includes a second indicator bit, wherein a bit value of the second indicator bit indicates whether the encrypted first AID is contained at a specified bit position of the action frame.

In a case where the above second approach is adopted (that is, the STA calculates the AID to be used next time in advance based on the secret information shared with the AP, and each time the STA updates its OTA MAC, the STA directly uses the AID to be used next time that has been calculated in advance and calculates the AID to be used next time at the same time), the algorithm used by the AP and the STA to calculate the AID to be used next time by the STA is as follows.

HASH(MACSTA∥IV∥AID_{now})₁₁. The parameter MACSTA is the OTA MAC address currently used by the STA, the parameter IV is the secret information between the AP and the STA (IV herein is consistent with the secret information IV used for processing the PN, the SN, the scrambler seed, and the TID), the parameter AID_{now} is the AID currently used by the STA, ∥ represents string concatenation, the function HASH(X) represents a Hash operation on the parameter X, and the algorithm may be SHA2, SHA3 or the like, HASH(X)₁₁ represents that 11 bits are intercepted from the result of the HASH(X), for example, 11 bits are intercepted backward from the first bit, or 11 bits are intercepted forward from the last bit, or the like.

Each STA needs to maintain two AIDs (the current AID and the AID to be used next time) at the same time, and the AP considers the AIDs to be used next time of all STAs in associated state as allocated AIDs. After the AP calculates the AID to be used next time of a certain STA, the AP compares the AID value with the current AIDs and AIDs to be used next time of other STAs and the AID currently used by the STA. In case of conflicts, the AP selects an AID from its unallocated AIDs, encrypts the AID with the secret information IV (consistent with the secret information used for processing the PN, the SN, the scrambler seed, and the TID) shared with the STA, and puts the encrypted AID in a management frame for transmission to the STA. The format of the management frame is as illustrated in FIG. 12. Upon receiving the management frame, the STA acquires the AID to be used next time by decrypting the management frame using the secret information IV shared with the AP.

As illustrated in the schematic diagram of the management frame in FIG. 12, an action frame is transmitted. Because the values "30-125" of the Category field of the action frame are reserved, an arbitrary value is selected (e.g., "32") for indication in this solution. The Next AID Present bit is set to "1", indicating that a Next AID field is present later, otherwise indicating a Next AID field is not present subsequently. In a case where the STA receives the frame, the STA needs to decrypt the ciphertext in the Next AID field of the management frame using the secret information IV shared with the AP to acquire the AID to be used next time.

In some embodiments, the STA device and the AP device maintain old first information of the STA device within a first duration after the new first information of the STA device is updated based on first secret information.

In the embodiments of the present disclosure, because the new first information is generated by the STA device and the AP device respectively, each of the two parties may not know when the other party generates the new first information, and there may be a circumstance that one device has already generated the new first information but the other device has not generated the new first information. At this time, the other device may still transmit data using the old first information, and therefore, the device that has already generated the new first information still needs to reserve the old first information for a duration to ensure that it can still accurately receive the data transmitted by the peer based on the old first information.

For example, in the first approach for updating the AID, after the STA updates its OTA MAC from MACᵢ to MACᵢ₊₁, the STA maintains the old OTA MAC address MACᵢ and the AID corresponding to MACᵢ for a duration, and the STA uses the old AID prior to receiving the new AID allocates by the AP.

In the first approach for updating the AID, after the STA updates its OTA MAC from MACᵢ to MACᵢ₊₁, the AP maintains the old OTA MAC address MACᵢ of the STA and the AID corresponding to MACᵢ for a duration, and considers the old AID and the new AID of the STA as the same STA within this duration. After a duration, the AP recycle the old AID, and before this point of time, the old AID and the new AID of the STA are both considered as allocated AIDs.

In the two approaches for updating the AID of the STA provided in this solution, the first approach is that the AP allocates a new AID to the STA each time the STA changes its OTA MAC, and the second approach is that the STA calculates the AID to be used next time in advance based on the secret information shared with the AP, and the STA directly uses the AID to be used next time that has been calculated in advance each time the STA changes its OTA MAC and at the same time calculates the net AID to be used next time.

In this solution, in a case where the AID of the STA is changed using the first approach, assuming that the OTA MAC address of the STA is changed from MACᵢ to MACᵢ₊₁, in a case where the AP receives a frame whose transmitter address is MACᵢ₊₁, the AP allocates a new AID to the STA over a protected management frame. In this solution, in a case where the AID of the STA is changed using the second approach, when the OTA MAC of the STA is MACᵢ, the AP and the STA calculate the AID to be used next time based on the same secret information and the same algorithm; and in a case where the OTA MAC of the STA is changed from MACᵢ to MACᵢ₊₁, the STA directly changes the AID value to the value of the AID to be used next time that has been calculated in advance, and at the same time calculates the value of the updated AID when the OTA MAC is to be updated next time. In the second approach, after the AP calculates the AID to be used next time of a certain STA, the AP compares this value with the AIDs currently used by other STAs and AIDs to be used by other STAs next time and the AID currently used by the STA. If there is a conflict, the AP allocates an AID to be used next time to the STA.

In S1004, the STA device and the AP device perform data transmission based on the new first information.

In this solution, the STA puts the MSDUs into different priority queues based on the TID values provided by the MSDUs, looks for the OTA transmission value corresponding to the TID value in the TID mapping table maintained locally, and assigns the OTA transmission value corresponding to the TID to the TID field of the frame. Because the current OTA MAC address of the STA participates in the calculation of a random number, the OTA-TID value of the STA changes with the change of the OTA MAC of the STA. In a case where the AP receives the frame containing the TID from the STA, the AP looks for the actual TID value at the STA based on the OTA-TID value in the maintained TID mapping table, and then puts the MSDUs into different priority queues based on the actual TID values. Because the AP always processes the actual TID value of the MSDU, it is ensured that no connection between the AP and the STA is lost when the OTA-TID value changes. In this solution, the STA does not need to have additional frame interaction with the AP in order to update the OTA-TID value.

The solutions for processing the five elements above are introduced hereinafter in the cases that the STA device and the AP device each are a transmitter and a receiver.

### 1. STA as transmitter

### 1) Processing of AID

In a case where the new AID is generated using the first approach for updating the AID, when the STA updates the OTA MAC and has not received the new AID allocated by the AP, the STA uses the old AID for frame aggregation, and the STA directly uses the AID corresponding to the current OTA MAC address for frame aggregation in other situations.

In a case where the second approach for updating the AID is used, the STA directly uses the AID corresponding to the current OTA MAC address for frame aggregation.

### 2) Processing of TID

The procedure for processing a QoS data frame in a case where the STA transmits the QoS data frame is as follows:
In S1, the STA puts the MSDUs into different priority queues based on the TID values provided by the MSDUs.
In S2, the STA performs rate limiting on the MSDUs.
In S3, the STA performs frame aggregation on the MSDUs.
In S4, the STA (if the STA is an IBSS STA) puts the A-MSDU into a delay queue.
In S5, the STA allocates a SN to the A-MSDU based on a locally stored SN value.
In S6, the STA fragments the A-MSDU (if necessary).
In S7, the STA performs integrity verification and protection on the A-MSDU (optional).
In S8, the STA allocates a PN to the A-MSDU based on a locally stored PN value.
In S9, the STA encrypts and performs integrity verification on the A-MSDU (optional).
In S10, the STA adds a header and a CRC to the A-MSDU, the value of the TID field in the header is the OTA-TID value corresponding to the TID provided by the MSDU in the TID mapping table.
In S11, the STA performs frame aggregation on the MSDUs formed in S11.

### 3) Resetting of the uplink SN, uplink PN and uplink scrambler seed

When the STA changes its OTA MAC address within associated state, the STA resets the values of the uplink SN, uplink PN and uplink scrambler seed, with the processing procedure as follows:
In S1, the STA duplicates the values of the uplink SN, uplink PN and uplink scrambler seed corresponding to the previous OTA MAC address and maintains these values within a duration.
In S2, the STA acquires a current RN locally stored, and calculates the initial values of the uplink SN, uplink PN and uplink scrambler seed corresponding to the current OTA MAC address using the algorithm illustrated above.
In S3, the STA encapsulates frames using the new OTA MAC address and the values of the SN, PN and scrambler seed acquired in S2.

### 2. AP as transmitter

### 1) Processing of AID

The AP directly uses the AID corresponding to the current OTA MAC address of the STA for frame aggregation.

### 2) Processing of TID

The procedure for processing a QoS data frame in a case where the AP transmits the QoS data frame is as follows:
In S1, the AP puts the MSDUs into different priority queues based on the TID values provided by the MSDUs.
In S2, the AP performs rate limiting on the MSDUs.
In S3, the AP performs frame aggregation on the MSDUs.
In S4, the AP (if the STA is an IBSS STA) puts the A-MSDU into a delay queue.
In S5, the AP allocates a SN to the A-MSDU based on a locally stored SN value.
In S6, the AP fragments the A-MSDU (if necessary).
In S7, the AP performs integrity verification and protection on the A-MSDU (optional).
In S8, the AP allocates a PN to the A-MSDU based on a locally stored PN value.
In S9, the AP encrypts and performs integrity verification on the A-MSDU (optional).
In S10, the AP adds a header and a CRC to the A-MSDU, the TID value in the header is the OTA-TID value corresponding to the TID provided by the MSDU in the TID mapping table.
In S11, the AP performs frame aggregation on the MSDUs formed in S13.

### 3) Resetting of the downlink SN, downlink PN and downlink scrambler seed

When the STA changes its OTA MAC address within associated state, the AP resets the values of the downlink SN, downlink PN and downlink scrambler seed corresponding to the STA, with the processing procedure as follows:
In S1, the AP duplicates the values of the downlink SN, downlink PN and downlink scrambler seed corresponding to the previous OTA MAC address of the STA and maintains these values within a duration.
In S2, the AP acquires an RN corresponding to the STA, and calculates the initial values of the downlink SN, downlink PN and downlink scrambler seed corresponding to the STA address using the algorithm illustrated above.
In S3, the AP encapsulates frames using the new OTA MAC address of the STA and the values of the SN, PN and scrambler seed acquired in S2.

### 3. STA as receiver

### 1) Processing of AID

In the duration when the STA maintains the OTA MAC address previously used and the AID previously used, in a case where a received frame contains the AID currently used by the STA or the AID previously used by the STA, the frame is processed. In a case where the STA does not maintain the OTA MAC address previously used and the AID previously used, a received frame is processed only when the frame contains the AID currently used by the STA.

2) Processing of TID

The procedure for processing a QoS data frame in a case where the STA receives the QoS data frame is as follows:
In S1, the STA performs frame de-aggregation on a received aggregate medium access control (MAC) protocol data unit (A-MPDU).
In S2, the STA acquires an OTA-TID from a MPDU header; in a case where the receiver address is the OTA MAC address currently used by the STA, the STA looks for the TID corresponding to the OTA-TID from the TID mapping table maintained locally; and in a case where the receiver address is the OTA MAC address previously used by the STA, the STA looks for the TID corresponding to the OTA-TID from a temporary TID mapping table maintained locally, and then the STA replaces the OTA-TID contained in the header with the TID that has been found.
In S3, the STA verifies the MPDU header and the CRC.
In S4, the STA filters frames based on Address1.
In S5, the STA counts block ACKs.
In S6, the STA performs duplicate detection on the MPDUs.
In S7, the STA decrypts the MPDUs that have been detected in S8.
In S8, the STA caches and sorts block ACKs.
In S9, the STA performs SYNRA receiver filtering on MPDUs.
In S10, the STA performs replay detection on the A-MSDU (optional).
In S11, the STA reassemblies A-MSDU fragments.
In S12, the STA acquires MSDUs by performing frame de-aggregation on the A-MSDU.
In S13, the STA performs rate limiting on the MSDUs.
In S14, the STA puts the MSDUs into different priority queues based on the TID values.

### 3) Resetting of the downlink SN, downlink PN and downlink scrambler seed

In a case where the STA receives, for the first time, from the AP a frame whose receiver address is the updated OTA MAC address of the STA and which contains an SN, the STA first duplicates the value of the downlink SN corresponding to the OTA MAC address previously used (the STA maintains the value for a duration and then deletes the value), and then resets the value of the current downlink SN to the SN value in the frame.

In a case where the STA receives, for the first time, from the AP a frame whose receiver address is the updated OTA MAC address of the STA and which contains a PN, the STA first duplicates the value of the downlink replay counter corresponding to the OTA MAC address previously used (the STA maintains the value for a duration and then deletes the value), and then resets the value of the current downlink replay counter to the PN value in the frame.

In a case where the STA receives, for the first time, from the AP a frame whose receiver address is the updated OTA MAC address of the STA and which contains a scrambler seed, the STA first duplicates the value of the downlink scrambler seed corresponding to the OTA MAC address previously used (the STA maintains the value for a duration and then deletes the value), and then resets the value of the current downlink scrambler seed to the value of the scrambler seed in the frame.

In a case where the STA receives, for the first time, from the AP a frame whose receiver address is the OTA MAC address previously used by the STA and which contains an SN, a PN, or a scrambler seed, the STA processes the frame based on the value of the SN, the value of the replay counter or the value of the scrambler seed corresponding to the OTA MAC address previously used.

### 4. AP as receiver

### 1) Processing of AID

In a case where the new AID is generated using the first approach for updating the AID, within the duration when the AP maintains the OTA MAC address previously used and the AID previously used by the STA, where the AP receives from the STA a frame using the OTA MAC address previously used and the AID previously used, a frame using the updated OTA MAC address and the AID previously used, and a frame using the updated OTA MAC address and the updated AID, the frames is processed. Where the AP does not maintain the OTA MAC address previously used and the AID previously used by the STA, a received frame is processed only in a case where the AP receives from the STA the frame using the OTA MAC address currently used and the AID currently used.

In a case where the new AID is generated using the second approach for updating the AID, because the AID to be used next time by the STA has already been calculated, within the duration when the AP maintains the OTA MAC address previously used and the AID previously used by the STA, where the AP receives from the STA a frame using the OTA MAC address previously used and the AID previously used and a frame using the updated OTA MAC address and the updated AID, the frames is processed. Where the AP does not maintain the OTA MAC address previously used and the AID previously used by the STA, a received frame is processed only in a case where the AP receives from the STA the frame using the OTA MAC address currently used and the AID currently used.

### 2) Processing of TID

The procedure for processing a QoS data frame in a case where the AP receives the QoS data frame is as follows:
In S1, the AP performs frame de-aggregation on a received A-MPDU.
In S2, the AP acquires an OTA-TID from a MPDU header; in a case where the receiver address is the OTA MAC address currently used by the STA, the AP looks for the TID corresponding to the OTA-TID in the TID mapping table maintained locally; and in a case where the receiver address is the OTA MAC address previously used by the STA, the AP looks for the TID corresponding to the OTA-TID from a temporary TID mapping table maintained locally, and then the AP replaces the OTA-TID contained in the header with the TID that has been found.
In S3, the AP performs integrity verification on MPDUs.
In S4, the AP filters frames based on Address1.
In S5, the AP counts block ACKs.
In S6, the AP performs duplicate detection on the MPDUs.
In S9, the AP decrypts the MPDUs that have been detected in S8.
In S10, the AP caches and sorts block ACKs.
In S11, the AP performs SYNRA receiver filtering on MPDUs.
In S13, the AP performs replay detection on the A-MSDU (optional).
In S14, the AP acquires MSDUs by performing frame de-aggregation on the A-MSDU.
In S15, the AP performs rate limiting on the MSDUs.
In S16, the AP puts the MSDUs into different priority queues based on the TID values.

### 3) Resetting of the uplink SN, uplink PN and uplink scrambler seed

In a case where the AP receives, for the first time, from the STA a frame whose receiver address is the updated OTA MAC address of the STA and which contains an SN, the AP first duplicates the value of the uplink SN corresponding to the OTA MAC address previously used (the AP maintains the value for a duration and then deletes the value), and then resets the value of the current uplink SN to the SN value in the frame.

In a case where the AP receives, for the first time, from the STA a frame whose receiver address is the updated OTA MAC address of the STA and which contains a PN, the AP first duplicates the value of the uplink replay counter corresponding to the OTA MAC address previously used (the AP maintains the value for a duration and then deletes the value), and then resets the value of the current uplink replay counter to the PN value in the frame.

In a case where the AP receives, for the first time, from the STA a frame whose receiver address is the updated OTA MAC address of the STA and which contains a scrambler seed, the AP first duplicates the value of the uplink scrambler seed corresponding to the OTA MAC address previously used by the STA (the AP maintains the value for a duration and then deletes the value), and then resets the value of the current uplink scrambler seed to the value of the scrambler seed in the frame.

In a case where the AP receives, for the first time, from the STA a frame whose receiver address is the OTA MAC address previously used by the STA and which contains an SN, a PN, or a scrambler seed, the AP processes the frame based on the value of the SN, the value of the replay counter or the value of the scrambler seed corresponding to the OTA MAC address previously used by the STA.

In summary, according to the technical solution according to the embodiments of the present disclosure, along with the change in the OTA MAC address of the STA device, the STA device and the AP device are capable of determining the new first information used during data transmission between the STA device and the AP device based on the first secret information. Because the first secret information is predetermined between the STA device and the AP device, the STA device and the AP device do not need to interact more with each other during the process of determining the new first information by themselves, thereby saving the signaling resources.

Based on the solution illustrated in FIG. 10, FIG. 13 illustrates a frame diagram of updating information according to some embodiments of the present disclosure. Referring to FIG. 13, taking an example where the first information includes the AID, the OTA-TID, the SN, the PN, and the scrambler seed, along with the change in the OTA MAC address of the STA, the communication device updates the five information as follows.

In S1, in an associating procedure, the STA device and the AP device negotiate on the first secret information IV.

In S2, the AID is updated.

In a first approach, the AP allocates an AID used for a next update of the OTA MAC.

In a second approach, HASH(MACSTA∥IV∥AIDnow)11 is calculated, and it is determined whether the HASH(MACSTA∥IV∥AIDnow)11 conflicts with the current AIDs of other STA devices and the AID to be used by the other STA devices next time. If there is no conflict, HASH(MACSTA∥IV∥AIDnow)11 is taken as the AID used by the STA for a next update of the OTA MAC; and if there is a conflict, the AP allocates an AID used for the next update of the OTA MAC.

In S3, RN= HASH(MACSTA∥IV) is calculated.

In S4, the OTA-TID, the SN, the PN, and the scrambler seed are updated based on the RN.

Updating the OTA-TID: acquire a new OTA-TID by calculating the actual TID⊕RN4.

Updating the SN: acquire a new SN by calculating the old SN⊕RN12.

Updating the PN: acquire a new PN by calculating the old PN⊕RN48.

Updating the scrambler seed: acquire a new scrambler seed by calculating the old scrambler seed⊕RN₇.

The procedures of maintaining an RN, a TID mapping table and an AID list by the STA and the AP are as follows.

### 1) The STA generates and updates an RN and a TID mapping table:

When the STA associates to the AP, the STA generates an RN and then generates a TID mapping table. When the STA changes its OTA MAC address within associated state, the STA first updates the RN and then updates the TID mapping table. After the STA is disassociated from the AP, the STA clears the stored RN and TID mapping table.

### (1) Generation of RN

When the STA associates to the AP, the STA negotiates with the AP on a secret value IV and stores the secret value IV, and at the same time calculates and stores a random number RN=HASH(MACSTA∥IV) locally. The initial MACSTA is the OTA MAC address used by the STA when associating to the AP.

### (2) Update of RN

When the STA changes its OTA MAC address within associated state, the STA calculates HASH(MACSTA∥IV) locally, and at this time the MACSTA is the updated OTA MAC address of the STA. The STA updates the stored RN value to HASH(MACSTA∥IV).

### (3) Generation of TID mapping table

After the STA is successfully associated to the AP, the STA locally generates a TID mapping table as illustrated in Table 1 below. The first row illustrates all values within the TID value range (0 to 15 bits), with a length of 16 bits. All values in the TID value range are stored in an ascending order, and the values in this row keep unchanged within associated state. The second row illustrates the OTA-TID values corresponding to all values within the TID value range at the current OTA MAC address of the STA, which are sequentially 0⊕RN4, 1⊕RN4, 2⊕RN4, ......, and 15⊕RN4.

**Table 1**

| TID | 0 | 1 | 2 | 3 | ...... | 15 |
|---|---|---|---|---|---|---|
| OTA TID | OTA TID₀ | OTA TID₁ | OTA TID₂ | OTA TID₃ | ...... | OTA TID₁₅ |

### (4) Update of TID mapping table

When the STA changes its OTA MAC address within associated state, the STA updates the maintained TID mapping table as follows.

In S1, the STA duplicates the TID mapping table corresponding to the previous OTA MAC address and maintains the table within a duration. The table is referred to as a temporary TID mapping table.

In S2, the STA acquires a locally stored RN. Because the STA updates the RN first and then updates the AID mapping table, the RN acquired at this time is a new RN.

In S3, the STA calculates 0⊕RN4, 1⊕RN4, 2⊕RN4, ......, and 15⊕RN4.

In S4, the STA updates the values in the second row of the TID mapping table to the values acquired in S3.

### (5) Generation of AID list (This occurs when the second approach is adopted)

After the STA is successfully associated to the AP, the STA locally generates an AID list as illustrated in Table 2 below.

The first column of Table 2 illustrates the OTA MAC address currently used by the STA. The second column of Table 2 illustrates the AID corresponding to the OTA MAC address currently used by the STA, and the initial AID value is an AID contained in the association response frame transmitted from the AP to the STA when the STA is associated with the AP. The third column of Table 2 illustrates an AID to be used next time by the STA, i.e., the AID value corresponding to a new OTA MAC address when the STA updates the OTA MAC address, and the value is acquired by calculating HASH(MACSTA∥IV∥AID_{now})₁₁. After the AP calculates an AID to be used next time by a STA, the AP compares the AID value with the AIDs currently used by other STAs and AIDs to be used next time by other STAs and the AID currently used by the STA. If there is a conflict, the AP allocates, using the management frame as illustrated in FIG. 12, a valid AID to the STA as the AID to be used next time. In a case where the STA receives the management frame as illustrated in FIG. 12, the STA sets the AID value to be used next time to the AID value in the management frame.

**Table 2**

| OTA address of STA | AID currently used by STA | AID to be used next time by STA |
|---|---|---|
| OTA MAC | AID_{now} | AIDₙₑₓₜ |

### (6) Update of AID list (This occurs when the second approach is adopted)

When the STA changes its OTA MAC address within associated state, the STA updates the maintained AID list as follows.

In S1, the STA stores the OTA MAC address previously used and the corresponding AID (which are cleared after being maintained for a duration).

In S2, the STA updates the first column of Table 2 to the new OTA MAC address.

In S3, the STA assigns the value of AIDₙₑₓₜ to the value of AID_{now}.

In S4, the STA calculates HASH(MACSTA∥IV∥AID_{now})₁₁, and assigns HASH(MACSTA∥IV∥AID_{now})₁₁ to the value of AIDₙₑₓₜ. In a case where the STA receives the management frame as illustrated in FIG. 12, the STA re-assigns the decrypted value of the Next AID field in the management frame to the value of AIDₙₑₓₜ.

### 2) The AP generates and updates an RN and a TID mapping table:

When the STA associates to the AP, the AP first generates an RN corresponding to the STA, and then generates a record corresponding to the STA and inserts the record into the tail of the mapping table. When the STA changes its OTA MAC address within associated state, the AP first updates the RN corresponding to the STA and then updates the record corresponding to the STA in the mapping table. After the STA is disassociated from the AP, the AP clears the RN corresponding to the STA and clears the record corresponding to the STA in the mapping table.

### (1) Generation of RN

When the STA associates to the AP, the AP negotiates with the STA on a secret value IV and stores the secret value IV, and at the same time calculates and stores a random number RN=HASH(MACSTA∥IV) locally. The MACSTA is the OTA MAC address currently used by the STA, and the initial MACSTA is the OTA MAC address used by the STA when associating to the AP.

### (2) Update of RN

When the STA associated with the AP changes its OTA MAC address, the AP calculates HASH(MACSTA∥IV) locally, and at this time the MACSTA is the updated OTA MAC address of the STA. The AP updates the stored RN value corresponding to the STA to HASH(MACSTA∥IV).

### (3) Generation of TID mapping table

The TID mapping table generated by the AP is illustrated in Table 3. The first row illustrates all values in the TID value range (0 to 15), and the values are stored in an ascending order. The values in this row keep unchanged within associated state. The other rows illustrate the OTA-TID values corresponding to STAs associated with the AP, which are sequentially 0⊕RN4, 1⊕RN4, 2⊕RN4, ......, and 15⊕RN4. The values in the other rows are an in one-to-one mapping relationship with the values in the first row. For example, as illustrated in Table 3, in a case where the actual TID value of a frame transmitted from the AP to STA1 is 0, the OTA-TID value of the frame transmitted from the AP to STA1 is OTA-TID1-0. In a case where no STA is associated with the AP, the table is empty.

In a case where a STA is associated with the AP, the AP calculates the OTA-TID value corresponding to the STA according to the above calculation method, and in a case where a STA is successfully associated with the AP, the AP inserts the OTA-TID value corresponding to the STA into the tail of the table.

**Table 3**

| TID | 0 | 1 | 2 | 3 | ...... | 15 |
|---|---|---|---|---|---|---|
| OTA TID of STA₁ | OTA TID₁₋₀ | OTA TID₁₋₁ | OTA TID₁₋₂ | OTA TID₁₋₃ | ...... | OTA TID₁₋₁₅ |
| OTA TID of STA₂ | OTA TID₂₋₀ | OTA TID₂₋₁ | OTA TID₂₋₂ | OTA TID₂₋₃ | ...... | OTA TID₂₋₁₅ |
| OTA TID of STA₃ | OTA TID₃₋₀ | OTA TID₃₋₁ | OTA TID₃₋₂ | OTA TID₃₋₃ | ...... | OTA TID₃₋₁₅ |
| ...... | ...... | ...... | ...... | ...... | ...... | |
| OTA TID of STAₙ | OTA TIDₙ₋₀ | OTA TID ₙ₋₁ | OTA TID ₙ₋₂ | OTA TID ₙ₋₃ | ...... | OTA TID ₙ₋₁₅ |

### (4) Update of TID mapping table

When the STA associated with the AP changes its OTA MAC address, the record corresponding to the STA in the TID mapping table is updated as follows.

In S1, the AP duplicates a record of the previous OTA MAC address used by the STA in TID mapping table. This record is referred to as a temporary TID mapping record.

In S2, the AP acquires a stored RN corresponding to the STA.

In S3, the AP acquires the OTA-TID values corresponding to the OTA MAC address currently used by the STA according to the calculation method described in 3.1, i.e., 0⊕RN₄, 1⊕RN₄, 2⊕RN4, ...... , and 15⊕RN4.

In S4, the AP updates the records corresponding to the previous OTA MAC address used by the STA in TID mapping table to the values acquired in S3.

### (5) Generation of AID list (This occurs when the second approach is adopted)

The AID list generated by the AP is illustrated in Table 4. The first column illustrates the OTA MAC addresses currently used by all STAs that are associated with the AP. The second column illustrates the AIDs currently used by all STAs that are associated with the AP, and the initial values in this column are AID values in association response frames when the STAs are associated with the AP. The third column illustrates AIDs to be used next time by all STAs that are associated with the AP, and the values are acquired by calculating HASH(MACSTA∥IV∥AID_{now})₁₁. However, in a case where HASH(MACSTA∥IV∥AIDnow)11 conflicts with the value in Table 4, the value is an AID value selected from AIDs that have not been allocated by the AP, and the AP transmits, using the management frame as illustrated in FIG. 12, a ciphertext of an AID to be used next time by the STA to the STA. In a case where HASH(MACSTA∥IV∥AIDnow)11 does not conflict with the value in Table 4, no management frame is transmitted.

**Table 4**

| STA | Current AID | Next AID |
|---|---|---|
| STA₁ | AID₁₁ | AID₁₂ |
| STA₂ | AID₂₁ | AID₂₂ |
| STA₃ | AID₃₁ | AID₃₂ |
| ...... | ...... | ...... |
| STAₙ | AIDₙ₁ | AIDₙ₂ |

### (6) Update of AID list (This occurs when the second approach is adopted)

When the STA associated with the AP changes its OTA MAC address, the record corresponding to the STA in the AID mapping table is updated as follows.

In S1, the AP reserves the OTA MAC address previously used by the STA and the corresponding AID (which are cleared after being maintained for a duration, and the AID is considered as an allocated AID during the maintaining duration).

In S2, the AP updates values in the second column in the record corresponding to the STA to the values in the third column.

In S3, the AP calculates HASH(MACSTA∥IV∥AID_{now})₁₁. In a case where the value does not conflict with the values in Table 4, the AP allocates HASH(MACSTA∥IV∥AIDnow)11 to the values in the third column in the record corresponding to the STA, and in a case where the value conflicts with the values in Table 4, the AP selects an AID from unallocated AIDs and assigns the value of the selected AID to the values in the third column in the record corresponding to the STA, and at the same time, the AP transmits, using the management frame as illustrated in FIG. 12, a ciphertext of a AID to be used next time by the STA to the STA.

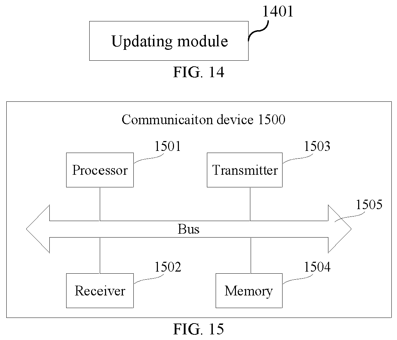

FIG. 14 is a block diagram of an apparatus for updating information according to some embodiments of the present disclosure. The apparatus for updating information has the function of implementing the method performed by the communication device (a STA device or an AP device) in the method illustrated in FIG. 8 or FIG. 10. As illustrated in FIG. 14, the apparatus includes: an updating module 1401.

The updating module 1401 is configured to update new first information of the STA device based on first secret information along with a change in an OTA MAC address of the STA device; wherein the first information is information used during data transmission between the STA device and the AP device, and the first secret information is information predetermined by the STA device and the AP device.

In some embodiments, the first information includes at least one of: an OTA-TID, a MAC frame SN, a MAC frame encryption/decryption PN, a PPDU scrambler seed, or an AID; wherein the OTA-TID is used for obfuscating an actual TID during data transmission.

In some embodiments, the updating module 1401 is configured to: in a case where the first information includes at least one of the OTA-TID, the SN, the PN, or the scrambler seed, generate a random number of the STA device based on the first secret information and a changed first OTA MAC address of the STA device along with the change in the OTA MAC address of the STA device; and generate the new first information of the STA device based on the random number of the STA device.

In some embodiments, the updating module 1401 is configured to generate a new OTA-TID of the STA device based on a first portion of bits in the random number of the STA device and actual TIDs in a case where the first information includes the OTA-TID, wherein the first portion of bits is a set of bits within a first bit position range of the random number of the STA device.

In some embodiments, the updating module 1401 is configured to acquire new OTA-TIDs of the STA device by performing an XOR operation on the first portion of bits and each of the actual TIDs; wherein the new OTA-TIDs of the STA device are in one-to-one correspondence with the actual TIDs.

In some embodiments, the updating module 1401 is configured to generate a new SN of the STA device based on a second portion of bits in the random number of the STA device and an old SN of the STA device in a case where the first information includes the SN, wherein the second portion of bits is a set of bits within a second bit position range of the random number of the STA device.

In some embodiments, the updating module 1401 is configured to acquire the new SN of the STA device by performing an XOR operation on the second portion of bits and the old SN of the STA device.

In some embodiments, in a case where the communication device is the STA device, the old SN of the STA device includes an old uplink SN of the STA device, and the new SN of the STA device includes a new uplink SN of the STA device; or in a case where the communication device is the AP device, the old SN of the STA device includes an old downlink SN of the STA device, and the new SN of the STA device includes a new downlink SN of the STA device.

In some embodiments, the updating module 1401 is configured to generate a new PN of the STA device based on a third portion of bits in the random number of the STA device and an old PN of the STA device in a case where the first information includes the PN, wherein the third portion of bits is a set of bits within a third bit position range of the random number of the STA device.

In some embodiments, the updating module 1401 is configured to acquire the new PN of the STA device by performing an XOR operation on the third portion of bits and the old PN of the STA device.

In some embodiments, in a case where the communication device is the STA device, the old PN of the STA device includes an old uplink PN of the STA device, and the new PN of the STA device includes a new uplink PN of the STA device; or in a case where the communication device is the AP device, the old PN of the STA device includes an old downlink PN of the STA device, and the new PN of the STA device includes a new downlink PN of the STA device.

In some embodiments, the updating module 1401 is configured to generate a new scrambler seed of the STA device based on a fourth portion of bits in the random number of the STA device and an old scrambler seed of the STA device in a case where the first information includes the scrambler seed, wherein the fourth portion of bits is a set of bits within a fourth position range of the random number of the STA device.

In some embodiments, the updating module 1401 is further configured to acquire the new scrambler seed of the STA device by performing an XOR operation on the fourth portion of bits and the old scrambler seed of the STA device.

In some embodiments, in a case where the communication device is the STA device, the old scrambler seed of the STA device includes an old uplink scrambler seed of the STA device, and the new scrambler seed of the STA device includes a new uplink scrambler seed of the STA device; or in a case where the communication device is the AP device, the old scrambler seed of the STA device includes an old downlink scrambler seed of the STA device, and the new scrambler seed of the STA device includes a new downlink scrambler seed of the STA device.

In some embodiments, the updating module 1401 is configured to acquire the random number of the STA device by performing a Hash calculation on a concatenated value (string) of the first OTA MAC address and the first secret information.

In some embodiments, the updating module 1401 is configured to: in a case where the first information includes the AID and the communication device is the AP device, allocate a new AID to the STA device along with the change in the OTA MAC address of the STA device; and transmit the new AID of the STA device to the STA device.

In some embodiments, the updating module 1401 is configured to: in a case where the first information includes the AID and the communication device is the STA device, receive a new AID allocated by the AP device to the STA device along with the change in the OTA MAC address of the STA device.

In some embodiments, the new AID of the STA device is encrypted by the AP device using the first secret information and transmitted to the STA device over an action frame.

In some embodiments, a Category field of the action frame includes a first indicator bit, wherein a bit value of the first indicator bit indicates whether the encrypted new AID is contained at a specified bit position of the action frame.

In some embodiments, the updating module 1401 is configured to: in a case where the first information includes the AID, generate the new AID of the STA device based on the first secret information, the changed first OTA MAC address of the STA device, and the AID currently used by the STA device, wherein the new AID of the STA device is used after a next update of the OTA MAC address by the STA device.

In some embodiments, the apparatus further includes: a detecting module, an allocating module and a transmitting module.

The detecting module is configured to detect whether the new AID of the STA device conflicts with new AIDs of other stations and the AID currently used in a case where the communication device is the AP device, wherein the other stations are stations other than the STA device in stations associated by the AP device.

The allocating module is configured to allocate a first AID to the STA device in a case where the new AID of the STA device conflicts with the new AIDs of other stations and the AID currently used.

The updating module is further configured to update the new AID of the STA device using the first AID.

The transmitting module is configured to transmit the first AID to the STA device.

In some embodiments, the apparatus further includes: a receiving module, configured to receive the first AID transmitted by the AP device and update the new AID of the STA device using the first AID in a case where the communication device is the STA device; wherein the first AID is an AID allocated to the STA device in a case where the AP device detects that the new AID of the STA device conflicts with new AIDs of other stations and the AID currently used, and the other stations are stations other than the STA device in stations associated by the AP device.

In some embodiments, the first AID is encrypted by the AP device using the first secret information and transmitted to the STA device over an action frame.

In some embodiments, a Category field of the action frame includes a second indicator bit, wherein a bit value of the second indicator bit indicates whether the encrypted first AID is contained at a specified bit position of the action frame.

In some embodiments, the apparatus further includes: a maintaining module, configured to maintain old first information of the STA device within a first duration upon updating the new first information of the STA device based on first secret information.

It should be noted that when implementing the functions of the apparatus according to the above embodiments, the division of the various functional modules is merely exemplary. In practice, the above functions may be assigned to different functional modules based on actual needs, that is, the content structure of the device can be divided into different functional modules to accomplish all or part of the above functions.

With regard to the apparatus in the above embodiments, the specific mode in which each module performs the operation has been described in detail in the embodiments related to the method, which is not described in detail any further.

FIG. 15 is a schematic structural diagram of a communication device 1500 according to some embodiments of the present disclosure. The communication device 1500 includes a processor 1501, a receiver 1502, a transmitter 1503, a memory 1504, and a bus 1505.

The processor 1501 includes one or more processing cores. The processor 1501 runs various functional applications and performs information processing by running software programs and modules.

The receiver 1502 and the transmitter 1503 may be implemented as one communication assembly. The communication assembly may be a communication chip, which may also be referred to as a transceiver.

The memory 1504 is connected to the processor 1501 via the bus 1505.

The memory 1504 may be configured to store at least one computer program. The processor 1501 is configured to load and run the at least one computer program to perform the processes in the above method embodiments.

In addition, the memory 1504 may be implemented using any type of volatile or non-volatile storage device or a combination thereof. The volatile or non-volatile storage device includes but is not limited to: a magnetic disk or an optical disc, an electrically erasable programmable read-only memory (EEPROM), an erasable programmable read-only memory (EPROM), a static random access memory (SRAM), a read-only memory (ROM), a magnetic memory, a flash memory, or a programmable ROM (PROM).

In some embodiments, the processor runs the at least one computer program to cause the communication device to perform the processes performed by the STA device or the AP device in the above method illustrated in FIG. 8 or FIG. 10. For example, the processor updates new first information of the STA device based on first secret information along with a change in an OTA MAC address of the STA device. The first information is information used during data transmission between the STA device and the AP device, and the first secret information is information predetermined by the STA device and the AP device.

The embodiments of the present disclosure further provide a computer-readable storage medium. The computer-readable storage medium stores at least one computer program. The at least one computer program, when loaded and run by a processor, causes the processor to perform all or part of the processes performed by the STA device or the AP device in the above method illustrated in FIG. 8 or FIG. 10.

The present disclosure further provides a chip. The chip, when running in a communication device, causes the communication device to perform all or part of the processes performed by the STA device or the AP device in the above method illustrated in FIG. 8 or FIG. 10.

The present disclosure further provides a computer program product. The computer program product or computer program includes at least one computer instruction stored in a computer-readable storage medium. The at least one computer instruction, when read from the computer-readable storage medium by a processor of a communication device, causes the communication device to perform all or part of the processes performed by the STA device or the AP device in the above method illustrated in FIG. 8 or FIG. 10.

The present disclosure further provides a computer program. The computer program, when run by a processor of a communication device, causes the communication device to perform all or part of the processes performed by the STA device or the AP device in the above method illustrated in FIG. 8 or FIG. 10.

It should be appreciated by those skilled in the art that in the one or more examples described above, the functions described in the embodiments of the present disclosure may be implemented using hardware, software, firmware, or any combination thereof. The functions, when implemented using software, are stored in a computer-readable medium or transmitted as one or more instructions or codes in the computer-readable medium. The computer-readable medium includes a computer storage medium and a communication medium, wherein the communication medium includes any medium that facilitates the transfer of a computer program from one place to another. The storage medium is any available medium that is accessible by a general-purpose or special-purpose computer.

Described are merely embodiments of the present disclosure and are not intended to limit the present disclosure. Any modifications, equivalent replacements, improvements, and the like, made within the spirit and principle of the present disclosure shall fall within the protection scope of the present disclosure.

## Claims

1. A method for updating information, wherein the method is applicable to a communication device, the communication device being one of a station (STA) device or an access point (AP) device in a wireless local area network (WLAN), and the method comprises:
updating new first information of the STA device based on first secret information along with a change in an over-the-air (OTA) medium access control (MAC) address of the STA device;
wherein the first information is information used during data transmission between the STA device and the AP device, and the first secret information is information predetermined by the STA device and the AP device.

2. The method according to claim 1, wherein the first information comprises at least one of:
an OTA traffic identifier (OTA-TID), a MAC frame sequence number (SN), a MAC frame encryption/decryption packet number (PN), a physical layer protocol data unit (PPDU) scrambler seed, or an association ID (AID);
wherein the OTA-TID is used for obfuscating an actual TID during data transmission.

3. The method according to claim 2, wherein calculating the new first information of the STA device based on the first secret information along with the change in the OTA MAC address of the STA device comprises:
in a case where the first information comprises at least one of the OTA-TID, the SN, the PN, or the scrambler seed, generating a random number of the STA device based on the first secret information and a changed first OTA MAC address of the STA device along with the change in the OTA MAC address of the STA device; and
generating the new first information of the STA device based on the random number of the STA device.

4. The method according to claim 3, wherein generating the new first information of the STA device based on the random number of the STA device comprises:
generating a new OTA-TID of the STA device based on a first portion of bits in the random number of the STA device and actual TIDs in a case where the first information comprises the OTA-TID, wherein the first portion of bits is a set of bits within a first bit position range of the random number.

5. The method according to claim 4, wherein generating the new OTA-TID of the STA device based on the first portion of bits in the random number of the STA device and the actual TIDs comprises:
acquiring new OTA-TIDs of the STA device by performing an XOR operation on the first portion of bits and each of the actual TIDs, wherein the new OTA-TIDs of the STA device are in one-to-one correspondence with the actual TIDs.

6. The method according to claim 3, wherein generating the new first information of the STA device based on the random number of the STA device comprises:
generating a new SN of the STA device based on a second portion of bits in the random number of the STA device and an old SN of the STA device in a case where the first information comprises the SN, wherein the second portion of bits a set of bits within a second bit position range of the random number of the STA device.

7. The method according to claim 6, wherein generating the new SN of the STA device based on the first portion of bits in the random number of the STA device and the old SN of the STA device comprises:
acquiring the new SN of the STA device by performing an XOR operation on the second portion of bits and the old SN of the STA device.

8. The method according to claim 6 or 7, wherein
in a case where the communication device is the STA device, the old SN of the STA device comprises an old uplink SN of the STA device, and the new SN of the STA device comprises a new uplink SN of the STA device; or
in a case where the communication device is the AP device, the old SN of the STA device comprises an old downlink SN of the STA device, and the new SN of the STA device comprises a new downlink SN of the STA device.

9. The method according to claim 3, wherein generating the new first information of the STA device based on the random number of the STA device comprises:
generating a new PN of the STA device based on a third portion of bits in the random number of the STA device and an old PN of the STA device in a case where the first information comprises the PN, wherein the third portion of bits is a set of bits within a third bit position range of the random number of the STA device.

10. The method according to claim 9, wherein generating the new PN of the STA device based on the third portion of bits in the random number of the STA device and the old PN of the STA device comprises:
acquiring the new PN of the STA device by performing an XOR operation on the third portion of bits and the old PN of the STA device.

11. The method according to claim 9 or 10, wherein
in a case where the communication device is the STA device, the old PN of the STA device comprises an old uplink PN of the STA device, and the new PN of the STA device comprises a new uplink PN of the STA device; or
in a case where the communication device is the AP device, the old PN of the STA device comprises an old downlink PN of the STA device, and the new PN of the STA device comprises a new downlink PN of the STA device.

12. The method according to claim 3, wherein generating the new first information of the STA device based on the random number of the STA device comprises:
generating a new scrambler seed of the STA device based on a fourth portion of bits in the random number of the STA device and an old scrambler seed of the STA device in a case where the first information comprises the scrambler seed, wherein the fourth portion of bits is a set of bits within a fourth bit position range of the random number of the STA device.

13. The method according to claim 12, wherein generating the new scrambler seed of the STA device based on the fourth portion of bits in the random number of the STA device and the old scrambler seed of the STA device comprises:
acquiring the new scrambler seed of the STA device by performing an XOR operation on the fourth portion of bits and the old scrambler seed of the STA device.

14. The method according to claim 12 or 13, wherein
in a case where the communication device is the STA device, the old scrambler seed of the STA device comprises an old uplink scrambler seed of the STA device, and the new scrambler seed of the STA device comprises a new uplink scrambler seed of the STA device;
in a case where the communication device is the AP device, the old scrambler seed of the STA device comprises an old downlink scrambler seed of the STA device, and the new scrambler seed of the STA device comprises a new downlink scrambler seed of the STA device.

15. The method according to any one of claims 3 to 14, wherein generating the random number of the STA device based on the first secret information and the changed first OTA MAC address of the STA device along with the change in the OTA MAC address of the STA device comprises:
acquiring the random number of the STA device by performing a Hash calculation on a concatenated string of the first OTA MAC address and the first secret information.

16. The method according to claim 2, wherein calculating the new first information of the STA device based on the first secret information along with the change in the OTA MAC address of the STA device comprises:
in a case where the first information comprises the AID and the communication device is the AP device, allocating a new AID to the STA device along with the change in the OTA MAC address of the STA device; and
transmitting the new AID of the STA device to the STA device.

17. The method according to claim 2, wherein calculating the new first information of the STA device based on the first secret information along with the change in the OTA MAC address of the STA device comprises:
in a case where the first information comprises the AID and the communication device is the STA device, receiving a new AID allocated by the AP device to the STA device along with the change in the OTA MAC address of the STA device.

18. The method according to claim 16 or 17, wherein the new AID of the STA device is encrypted by the AP device using the first secret information and transmitted to the STA device over an action frame.

19. The method according to claim 18, wherein a Category field of the action frame comprises a first indicator bit, wherein a bit value of the first indicator bit indicates whether the encrypted new AID is contained at a specified bit position of the action frame.

20. The method according to claim 2, wherein calculating the new first information of the STA device based on the first secret information along with the change in the OTA MAC address of the STA device comprises:
generating a new AID of the STA device based on the first secret information, a changed first OTA MAC address of the STA device, and an AID currently used by the STA device in a case where the first information comprises the AID, wherein the new AID of the STA device is used after a next update of the OTA MAC address by the STA device.

21. The method according to claim 20, further comprising:
detecting whether the new AID of the STA device is in conflict with new AIDs of other stations and the AID currently used in a case where the communication device is the AP device, wherein the other stations are stations other than the STA device in stations accessed by the AP device;
allocating a first AID to the STA device in a case where the new AID of the STA device is in conflict with the new AIDs of other stations and the AID currently used;
updating the new AID of the STA device using the first AID; and
transmitting the first AID to the STA device.

22. The method according to claim 20, further comprising:
receiving a first AID from the AP device and updating the new AID of the STA device using the first AID in a case where the communication device is the STA device;
wherein the first AID is an AID allocated by the AP device to the STA device in a case where the AP device detects that the new AID of the STA device is in conflict with new AIDs of other stations and the AID currently used, wherein the other stations are stations other than the STA device in stations accessed by the AP device.

23. The method according to claim 21 or 22, wherein the first AID is encrypted by the AP device using the first secret information and transmitted to the STA device over an action frame.

24. The method according to claim 23, wherein a Category field of the action frame comprises a second indicator bit, wherein a bit value of the second indicator bit indicates whether the encrypted first AID is contained at a specified bit position of the action frame.

25. The method according to any one of claims 1 to 24, further comprising:
maintaining old first information of the STA device within a first duration upon updating the new first information of the STA device based on first secret information.

26. An apparatus for updating information, comprising:
an updating module, configured to update new first information of a station (STA) device based on first secret information along with a change in an over-the-air (OTA) medium access control (MAC) address of the STA device;
wherein the first information is information used during data transmission between the STA device and an access point (AP) device, and the first secret information is information predetermined by the STA device and the AP device.

27. A communication device, comprising: a processor, a memory and a transceiver;
wherein the memory stores at least one computer program therein, and the processor, when running the at least one computer program, causes the communication device to perform the method for updating information as defined in any one of claims 1 to 25.

28. A computer-readable storage medium, storing at least one computer program therein, wherein the at least one computer program, when run by a processor, causes the processor to perform the method for updating information as defined in any one of claims 1 to 25.

29. A chip, wherein the chip runs in a communication device to cause communication device to perform the method for updating information as defined in any one of claims 1 to 25.

30. A computer program product, comprising at least one computer instruction stored in a computer-readable storage medium; wherein a processor of a communication device, when reading and executing the at least one computer instruction from the computer-readable storage medium, causes the communication device to perform the method for updating information as defined in any one of claims 1 to 25.

31. A computer program, wherein the computer program, when run by a processor of a communication device, causes the communication device to perform the method for updating information as defined in any one of claims 1 to 25.
